Europäisches Patentamt

(19) European Patent Office

Office européen des brevets

(11) Numéro de publication: **0 139 560**
A1

(12) **DEMANDE DE BREVET EUROPEEN**

(21) Numéro de dépôt: **84401791.3**

(22) Date de dépôt: **11.09.84**

(51) Int. Cl.⁴: **C 11 D 3/44**
C 09 D 9/04, C 23 G 5/06

(30) Priorité: **13.09.83 FR 8314529**

(43) Date de publication de la demande:
**02.05.85 Bulletin 85/18**

(84) Etats contractants désignés:
**DE NL**

(71) Demandeur: **SOCIETE NATIONALE ELF AQUITAINE**
**Tour Aquitaine**
**F-92400 Courbevoie(FR)**

(72) Inventeur: **Gautier, Jean-Claude**
**5 rue Jean Jaurès**
**F-64140 Billere(FR)**

(72) Inventeur: **Lanore, François**
**51 Avenue Raymond Radiguet**
**F-94210 La Varenne Saint Hilaire(FR)**

(74) Mandataire: **Kohn, Armand**
**5 Avenue Foch**
**F-92380 Garches(FR)**

(54) **Composition aqueuse pour la dispersion de substances hydrophobes, applicable notamment au nettoyage d'objets souillés par une peinture ou similaire.**

(57) Composition aqueuse pour la dispersion de substances hydrophobes, constituée par une microémulsion d'un ou de plusieurs hydrocarbures, cétones et alcools et/ou éthers ou esters de glycol en présence d'un composé tensio-actif, dans l'eau, caractérisée en ce que l'eau présente un pH de 8 à 14 et que le rapport molaire des groupes carbonyle (−CO−) présents, à l'hydrocarbure, est de 0,2 à 1.

Application de cette composition à l'enlèvement de différentes peintures, en particulier au lavage de pinceaux, le lavage peut être terminé à l'eau.

EP 0 139 560 A1

0139560

1

Composition aqueuse pour la dispersion de substances hydrophobes, applicable notamment au nettoyage d'objets souillés
par une peinture ou similaire.

La présente invention se rapporte à une composition aqueuse,
perfectionnée, pour la dispersion de diverses substances
hydrophobes ; elle consiste plus particulièrement en des
mélanges aqueux transparents renfermant plusieurs solvants
organiques. Ces compositions sont utiles à la dispersion
aqueuse de solides insolubles dans l'eau tels que goudrons,
asphaltes, huiles minérales ou végétales, résines, vernis,
différents polymères utilisés dans des peintures ou enduits,
etc. La composition suivant l'invention est applicable notamment à la dilution de différentes suspensions ou solutions, telles que peintures, enduits, ignifugeants, produits insecticides ou cryptogamiques ou autres. Elle permet d'autre part le nettoyage de toutes sortes d'objets ou
surfaces souillés par des substances hydrophobes mentionnées plus haut ; ainsi, peut-elle être employée au nettoyage de surfaces bétonnées, de murs, toîts, pièces métalliques telles que voies ferrées et autres. La nouvelle composition présente de grands avantages pour l'enlèvement de
peintures ou vernis de différentes surfaces et pour le lavage de pinceaux et brosses ayant servi à l'enduction avec
des peintures, vernis ou autres enduits.

Les applications sus-indiquées représentent des opérations
souvent importantes dans l'industrie, où des dilutions, nettoyages des cuves, de surfaces et outils, se présentent presque journellement. Aussi a-t-on proposé de nombreuses formules de solvants devant servir dans les cas en question. L'utilisation de solvants organiques seuls, qui fut pratiquée
longtemps, est fort coûteuse, présente généralement des inconvénients sanitaires, et son efficacité n'est pas toujours
suffisante. On a donc cherché à se servir de compositions aqueuses, renfermant des agents tensio-actifs ; comme il fal-

2

lait cependant la présence de dissolvants pour détacher les produits hydrophobes de leur support, on a été amené à employer des mélanges aqueux renfermant différents solvants organiques, tels que esters, cétones, éthers, alcools, solvants chlorés, etc. Ainsi, par exemple, selon le brevet belge 874 820, on utilise, pour le nettoyage des pinceaux, un mélange renfermant du xylène, de l'isobutanol, de l'éthylène glycol et un émulsifiant, en présence d'une faible proportion d'eau. Suivant le brevet belge 821 886, un décapant pour peintures, permettant le lavage subséquent à l'eau, contient des alkoxyalcanols et des esters alkoxyalcanoliques. Un autre exemple des compositions décapantes pour peintures est donné dans le brevet US 3 702 304 où l'on propose une émulsion aqueuse de xylol, de diméthylformamide, de dichlorométhane et de polyéthylène glycol. Chacune de ces compositions de la technique antérieure a son domaine d'applications, mais aucune n'a une portée générale ; il en résulte que certains nettoyages ou dilutions sont difficiles, parce que la substance hydrophobe, émulsionnée au départ, reprécipite lorsqu'on lave à l'eau.

Un certain progrès dans cette voie fut réalisé par des compositions qui contenaient à la fois un hydrocarbure chloré, une cétone et un alcool ; additionnée d'un agent émulsifiant convenable, généralement un sulfonate dérivé des alcools gras, cette composition du brevet US 3 737 386 peut être diluée à l'eau et elle permet des lavages dans de nombreux cas où il s'agit d'éliminer des goudrons, des graisses, des résines, certaines peintures et vernis. Cependant, l'efficacité de ce mélange n'est pas encore suffisante, car - dans beaucoup de cas - la matière hydrophobe reprécipite lorsqu'on termine le lavage à l'eau ; d'ailleurs, les compositions elles-mêmes ne sont pas assez stables et leurs composants précipitent, surtout aux températures peu élevées pendant la dilution à l'eau.

3

La présente invention réalise un perfectionnement en ce qu'elle porte sur des compositions applicables dans une gamme beaucoup plus large que dans le passé, de matières hydrophobes à diluer ou à enlever ; elle présente en outre l'avantage d'employer des compositions très stables, du moins à des températures allant de 0 à 70°C, pouvant être diluées pratiquement sans précipitation de leurs constituants, en toute proportion avec de l'eau.

La composition suivant l'invention est constituée par une microémulsion comprenant une forte proportion d'eau et au moins trois types de solvants organiques, hydrocarbures, cétones, alcools ou éthers ou esters de glycol et un agent tensio-actif susceptible de produire une microémulsion de l'hydrocarbure présent. Autrement dit, ces nouvelles compositions sont des liquides dans lesquels les gouttelettes d'hydrocarbure ont des tailles inférieures à 0,4 micron et sont parfaitement stables aux températures ambiantes : leur avantage est d'être diluables à l'infini dans l'eau.

Ces nouvelles compositions sont caractérisées en ce que l'eau qu'elles contiennent est alcaline, d'un pH de 8 à 14 et de préférence de 10 à 13,5.

Une autre caractéristique importante de ces compositions est que le rapport molaire des groupes carbonyle (-CO-) présents, à l'hydrocarbure, est compris entre 0,2 et 1. De préférence ce rapport CO/hydrocarbure est de 0,25 à 0,9.

Les groupes carbonyle peuvent être apportés par différentes cétones, de préférence en $C_3$ à $C_{12}$ et éventuellement porteuses d'autres groupements, par exemple ester, halogène, second carbonyle. Ainsi peut-on employer l'acétone, les méthyl-éthylcétone, diéthyl-cétone, méthyl-propyl cétone, méthyl-butyl cétone, éthyl-butyl cétone, acétonyl-acétone, acétyl-acétone, acétoxy-acétone, chloro-acétone, méthyl- ou éthyl-chloro-butyl cétone, méthyl-isobutyl-cétone, diacétone-alcool, etc.

En ce qui concerne les hydrocarbures, on peut employer ceux de la technique connue, par exemple aliphatiques, aromatiques ou naphténiques, de préférence en nombre de carbones ne dépassant pas 12. Conviennent notamment des hydrocarbures comme pentane, hexane, heptane, octane, décane, dodécane, pris séparément ou en des mélanges industriels tels que l'éther de pétrole, le white spirit, etc. De même peut-on employer les benzène, toluène ou xylène et leurs dérivés mono ou dichlorés, éventuellement en mélange tel que le tout soit liquide. Le cyclohexane et le cyclopentane conviennent également. Une classe d'hydrocarbures très recommandables comprend ce que l'on appelle les solvants chlorés, c'est-à-dire principalement les mono, di et trichloro-alcanes ou alcènes en $C_1$ à $C_4$ ; de tels solvants sont par exemple les trichloréthylène, monochloro-méthane, dichloro-méthane, trichloro-méthane, tétrachlorure de carbone, dichloro-1,1 et 1,2 éthanes, trichloro-1,1,1 ou 1,1,2 éthane, dichloro 1,2-propane, etc.

Les alcools, utilisables dans la réalisation de l'invention, sont généralement des alcools en $C_1$ à $C_8$ et surtout en $C_1$ à $C_4$, en particulier méthanol, éthanol, isopropanol, le premier étant le plus économique. On peut également employer des polyols, notamment des glycols comme éthylène glycol, diéthylène glycol, propylène glycol et leurs dérivés éthérifiés et/ou estérifiés : butyl éther d'éthylène glycol, éthyl éther d'éthylène glycol, diméthyl éther d'éthylène glycol, méthyl éther de propylène glycol, acétate d'éthyl glycol, acétate de butyl glycol, sans que cette liste soit limitative. D'une façon générale, les composés à groupes hydroxyle, nécessaires dans les compositions suivant l'in-

5

vention, sont choisis parmi ceux qui constituent des cotensioactifs dans la préparation de microémulsions de l'eau avec des huiles.

Pour la préparation de la microémulsion suivant l'invention, on peut employer tout agent tensio-actif connu pour son utilisation dans ce but. Conviennent particulièrement bien des agents anioniques, éventuellement associés à des non ioniques. Sont utilisables notamment des sulfonates de pétrole, des alkyl-aryl-sulfonates, comme par exemple les alkyl-benzène-sulfonates ou les o-xylène sulfonates ; d'autres tensio-actifs avantageux sont les alkyl-sulfates, les alkyl-éther-sulfates, ces sels tensio-actifs pouvant avoir comme cations des métaux alcalins, alcalino-terreux, ammonium ou une base azotée. Commercialement les sels de sodium sont les plus intéressants.

L'eau, faisant partie des microémulsions en question, est généralement alcalinisée au moyen de toute base appropriée, la soude, le carbonate de sodium et la potasse étant les plus économiques. Cette eau contient généralement 0,1 à 5 g de NaOH par litre, une quantité équivalente d'une autre base, ou bien divers sels tels que NaCl, $Na_2SO_4$ etc.

Comme exposé plus haut, les principales caractéristiques des compositions, suivant l'invention, sont : l'alcalinité de l'eau qu'elles contiennent et un rapport molaire bien déterminé, à savoir de 0,2 à 1,0 entre la quantité de groupes carbonyle, c'est-à-dire nombre de moles de cétones, et le nombre de molécules d'hydrocarbures utilisés. Il faut cependant que d'autres conditions quantitatives soit également satisfaites : ainsi le rapport OH/hydrocarbure (c'est-à-dire moles alcool/moles hydrocarbure) doit être compris entre 0,3 et 2,5 et de préférence entre 0,45 et 2.

6

En outre, pour que la microémulsion soit stable à des températures normales d'utilisation et qu'elle puisse être diluée avec de l'eau, sans séparation d'aucune phase, la proportion molaire de tensio-actifs employés par rapport à celle des cétones doit être comprise entre 0,1 et 0,6, le rapport préféré étant de 0,15 à 0,19, le rapport pondéral tensio-actif/cotensioactif étant de 0,5 à 2,7, et de préférence 0,8 à 22.

On voit que l'invention réside dans la détermination de certaines limites, assez étroites, de rapports moléculaires, pour lesquels - de façon tout-à-fait imprévue - on peut obtenir des microémulsions stables et librement diluables à l'eau.

Du point de vue de leur composition pondérale, les microémulsions, suivant l'invention, contiennent d'une façon générale :

|  |  |
|---|---|
| 15 à 30% en poids | d'hydrocarbure |
| 4 à 15% " " | de cétone |
| 6 à 15% " " | d'alcool ou glycols ou dérivés |
| 6 à 16% " " | de tensio-actif |

Les proportions préférées des composants non aqueux sont :

|  |  |
|---|---|
| hydrocarbure | 17 à 25% en poids |
| cétone | 6 à 12,5% " " |
| alcool | 7 à 15% " " |
| agent tensio-actif | 8 à 15% " " |

le reste étant constitué par l'eau alcaline. Bien entendu, chacun de ces types de constituants peut, en réalité, comprendre un ou plusieurs composés. Si l'on fait abstraction de l'eau présente, les compositions suivant l'invention pourraient paraître similaires à celles du brevet US 3 737 386 qui préconise des mélanges composés de

7

10 à 25% en poids d'hydrocarbure
25 à 40%    "    "    de cétone
40 à 50%    "    "    d'alcool
 1 à 10%    "    "    de tensio-actif.

Comme on voit, les rapports limites pondéraux, selon le brevet US, sont fort différents de ceux des compositions suivant l'invention. Les rapports suivants résultent, en effet, des limites pondérales mentionnées plus haut :

|  | Brevet US | Présente Invention |
|---|---|---|
| cétone /hydrocarbure | 1 à 4 | 0,13 à 1 |
| alcool ou glycol et dérivés /hydrocarbure | 1,6 à 5 | 0,2 à 1 |

Ainsi, en abaissant, dans une mesure bien déterminée, les proportions de cétone et d'alcool, par rapport à l'hydrocarbure, on arrive, suivant l'invention, à des microémulsions présentant une stabilité dans un domaine beaucoup plus large de températures et de dilution à l'eau.

Etant donné que les proportions, indiquées dans le brevet US, se rapportent surtout au dichlorométhane et trichloréthylène en tant qu'hydrocarbure, à la méthyl-éthyl-cétone et aux alcools en $C_2$ à $C_4$, les compositions suivant l'invention se distinguent nettement de celles de la technique antérieure, rien que par leurs compositions centésimales, comme le montrent les rapports pondéraux indiqués plus haut. Cependant, les propriétés d'un mélange microémulsionné selon l'invention changent lorsque des composants de masses moléculaires différentes sont utilisés. C'est pourquoi, suivant un trait particulier de l'invention, les limites des teneurs en les hydrocarbure, cétone et alcool sont déterminées en moles ; ainsi, contrairement à l'art antérieur, on peut sortir des limites pondérales indiquées, à condition que les rapports entre les nombres des molécules pré-

8

sentes soient compris dans une certaine marge prédéterminée.

Or, il résulte des indications du brevet US que le rapport
molaire cétone/hydrocarbure est de 1,18 à 4,7. On a vu
plus haut qu'une condition essentielle de l'invention est
de maintenir ce rapport dans les limites 0,2 à 1, pour avoir une microémulsion stable et diluable à l'eau, sans précipitation. D'autre part, d'après le brevet américain, le
rapport molaire alcool/hydrocarbure varie entre 2 et 7,
tandis que, suivant l'invention, ce rapport n'est que de
0,3 à 2,5 et, de préférence, 0,5 à 2, c'est-à-dire bien
inférieur à celui du brevet US. Il résulte de ce qui précède que les constituants non aqueux de la composition suivant l'invention peuvent avoir des masses moléculaires variables, sans compromettre la stabilité de la microémulsion,
à condition que les rapports molaires sus-indiqués soient
respectés.

L'invention est illustrée par les exemples non limitatifs
qui suivent.

EXEMPLES 1 à 8

Des microémulsions ont été préparées par mélange des composés, cités ci-après, avec de l'eau alcalinisée par 0,5 à
2,5 g de NaOH par litre.

Le tableau ci-après indique, dans sa partie supérieure, les
teneurs % en poids des constituants de la composition.

Ces constituants sont :
Hydrocarbure : mélange en poids égaux de trichloroéthane
$Cl_3C-CH_3$ (masse mol. 133,4) avec du dichlorométhane $Cl_2CH_2$ (masse mol. 84,9)

9

Cétone :          méthyl-éthyl cétone $CH_3COC_2H_5$ (masse moles
                  72,1) et/ou méthyl isobutyl cétone
                  $CH_3COCH_2(CH_3)_2$ (masse mol. 100)

Alcool : ou glycol : méthanol $CH_3OH$ (masse mol. 32),
                  éthanol $C_2H_5OH$ (masse mol. 46) ; diacétone
                  alcool $(CH_3)_2\text{-}\underset{\underset{OH}{|}}{C}\text{-}CH_2COCH_3$ (masse mol. 116) ;

                  mono éthyl éther de l'éthylène glycol
                  $C_2H_5\text{-}O\text{-}CH_2CH_2OH$ (masse mol. 90) ; mono
                  éthyl éther acétate de l'éthylène glycol
                  $CH_3\text{-}COO\text{-}CH_2\text{-}CH_2\text{-}O\text{-}C_2H_5$ (masse mol. 132).


Tensio-actif : mélange de 25 à 50% de lauryl-o-xylène sulfonate de sodium avec 75 à 50% de tétra-
                  cosyl-benzène sulfonate de sodium, vendu
                  dans le commerce sous la dénomination
                  SYNACTO (Esso Chimie). Ces tensio actifs
                  sont pris sous la forme de solution huileuse à 60% de matière active : ce sont les
                  quantités de celle-ci seule qui figurent
                  dans le tableau des résultats.
                  Ces tensio-actifs ont été additionnés dans
                  les exemples 6 et 8 respectivement de 1,7
                  et 1,9% en poids de nonyl phénol éthoxylé
                  qui améliore la stabilité en température de
                  la micro-émulsion.


Dans la partie supérieure du tableau, les exemples sont
numérotés dans l'ordre des teneurs croissantes en cétone.
Dans la partie médiane du tableau, sont données les compositions molaires % correspondantes, étant entendu que
l'eau alcaline représente la différence à 100.


Enfin, au bas du tableau, se trouvent les rapports molaires qui conditionnnent la bonne qualité de l'émulsion

0139560

10

(voir tableau à la page  12 ).

Toutes les compositions des exemples 1 à 8 sont diluables à l'eau et leur meilleure stabilité se trouve dans les domaines de températures suivantes :

Ex. 1 (eau de la microémulsion à 0,5 g/NaOH/l :
0° à plus de 60°C

2     "     "  à 1 g/NaOH/l :
3° à plus de 60°C

3     "     "  à 1 g/NaOH/l : 1° à 52°C

4     "     "  à 1,6 g/NaOH/l : 3° à 50°C

5     "     "  à 1 g/NaOH/l :
2° à plus de 60°C

6     "     "  à 1,3 g/NaOH/l :
1° à plus de 80°C

7     "     "  à 2g/NaOH/l : 1° à 45°C

8     "     "  à 2g/NaOH/l :
3° à plus de 70°C.

Chacune de ces microémulsions a été essayée pour le nettoyage des pinceaux ayant servi avec différents types de peinture : à huile, acrylique, glycérophtalique, époxy, polyuréthanne, peinture émulsionnée ; dans tous les cas, on a pu terminer le nettoyage du pinceau à l'eau sans qu'il n'y reste plus de peinture attachée. Les compositions des exemples 1, 2, 4 et 7 ont également servi au nettoyage des plaques de béton souillées de goudron : un bon nettoyage a pu être effectué, la dispersion de goudron formée ayant pu être enlevée avec de l'eau.

EXEMPLE 9

Une composition analogue à celle de l'exemple 7 est préparée à l'exclusion de l'alcool ; on constate qu'elle ne peut pas être diluée à l'eau, sans séparation en deux couches.

0139560

11

EXEMPLE 10

La composition de l'exemple 7 est modifiée par l'augmentation au double de la teneur pondérale en méthyl-éthyl-cétone, c'est-à-dire jusqu'à 24,4 au lieu de 12,2%. Le rapport molaire cétone/hydrocarbure dépasse ainsi 1,8 et la composition est instable et indiluable avec de l'eau au-dessous de 20°C.

EXEMPLE 11

Dans la composition de l'exemple 6, on remplace les 9,2% de méthyl-éthyl-cétone par 12,85% de méthyl-isobutyl-cétone (hexanone), le rapport molaire cétone/hydrocarbure restant le même, 0,46. La composition obtenue présente les mêmes propriétés.

EXEMPLE 12

Par rapport à la composition de l'exemple 10, on augmente encore la teneur en hexanone pour arriver à la formule pondérale :

|              |        |
|--------------|--------|
| hydrocarbure | 24,0 % |
| cétone       | 17,4   |
| alcool       | 9,3    |
| tensioactif  | 6,0    |
| eau à 2 g NaOH/l |     |
|              | 43,3   |

Ainsi la teneur pondérale en cétone dépasse la limite supérieure de 14% prévue plus haut pour la méthyl-éthyl-cétone. Néanmoins, la composition donne des résultats aussi bons que celle de l'exemple 3, parce que le rapport molaire cétone/hydrocarbure = 0,755 reste encore bien dans les limites suivant l'invention.

| EXEMPLES N° | 1 | 2 | 3 | 4 | 5 | 6 | 7 | 8 |
|---|---|---|---|---|---|---|---|---|
| COMPOSITIONS CENTESIMALES EN POIDS (%) | | | | | | | | |
| Hydrocarbures | 20,1 | 20,2 | 21 | 21,5 | 19,6 | 20,4 | 20,8 | 22 |
| Cétones | 6,4 | 8,3 | 8,6 | 8,6 | 8,6 | 9,2 | 12,2 | 13 |
| Alcools | - | - | - | 8,2 | 12 | - | 13,1 | 6 |
| Ethers ou esters de glycol | 13,8 | 12,9 | 10,5 | - | - | 13,8 | - | - |
| Tensioactifs | 13,5 | 14,4 | 12,4 | 12,2 | 13,9 | 15,7 | 12,2 | 12,7 |
| Eau alcaline | 46,3 | 44,3 | 47,6 | 49,2 | 46 | 41,3 | 41,7 | 46,1 |
| COMPOSITIONS MOLAIRES % CORRESPONDANTES | | | | | | | | |
| Hydrocarbures | 6,6 | 7,1 | 6,75 | 6,5 | 5,9 | 7,2 | 6,5 | 7,1 |
| Cétones | 2,1 | 2,85 | 2,8 | 3,65 | 2,65 | 3,3 | 5,4 | 5,9 |
| Alcools | - | - | - | 5,1 | 11,6 | - | 13,1 | 3,4 |
| Glycols et dérivés | 5,1 | 4,4 | 3,8 | - | - | 5,5 | - | - |
| Tensioactifs | 1 | 1 | 0,9 | 0,8 | 1 | 1,05 | 0,8 | 0,8 |
| RAPPORTS MOLAIRES | | | | | | | | |
| Cétones/hydrocarbure | 0,32 | 0,40 | 0,41 | 0,56 | 0,45 | 0,46 | 0,83 | 0,83 |
| Hydroxyle/ " | 0,77 | 0,62 | 0,6 | 0,78 | 2,00 | 0,76 | 2 | 0,48 |
| Tensioactif/cétone | 0,48 | 0,35 | 0,32 | 0,22 | 0,38 | 0,32 | 0,15 | 0,14 |
| Tensioactif/ cotensioactif | 0,98 | 1,11 | 1,18 | 1,48 | 1,16 | 1,14 | 0,93 | 2,11 |

12

0139560

13

EXEMPLES 13 et 14

Une composition dissolvante est préparée suivant la technique antérieure (FR 2 486 535 page 4, lignes 28-38), avec du lauryl-éther-sulfate de Na et d'alcools gras $C_{12}-C_{14}$, connu dans le commerce sous le nom de NEOPON LOS/F (WITCO CHEMICAL), en tant qu'agent tensio-actif. C'est la composition de l'exemple 13.

Une composition similaire - exemple 14 - est préparée à partir des mêmes constituants, mais avec un rapport (agent tensioactif) : (agent cotensioactif) modifié suivant l'invention, afin de former une micro-émulsion, et avec un pH de l'eau compris entre 8 et 14.

Voici les caractéristiques de ces deux exemples.

|  | EXEMPLE 13 | EXEMPLE 14 |
|---|---|---|
| % chlorure de méthylène ... | 36,0 | 36,0 |
| % diacétone alcool ......... | 29,5 | 29,5 |
| % alcool isopropylique ....... | 20,5 | 16,5 |
| % agent tensioactif ......... | 8,0 | 12,0 |
| % eau ...................... | 6,0 | 6,0 |
| Rapports:tensioactif/cétone .. | 0,27 | 0,47 |
| " tensioactif/alcool .. | 0,39 | 0,73 |
| pH de la phase aqueuse ....... | 6,5 | 10,5 |
|  | Séparation en deux couches dès qu'on a-joute de l'eau | Diluable à l'eau en toutes proportions |

Ainsi, la composition de l'art antérieur (exemple 13) a une phase aqueuse légèrement acide, ne forme pas de microémulsion, et ne peut pas être additionnée d'eau sans séparation en deux phases.

Par contre, la composition , modifiée, suivant l'invention (exemple 14 ), en ce qui concerne la proportion d'agent tensioactif et le pH de l'eau y contenue, est une microémulsion

0139560

14

stable, à laquelle on peut ajouter de l'eau à volonté, sans qu'une séparation de phases se produise.

EXEMPLES 15 et 16

De façon analogue aux exemples 13-14, on prépare une composition selon DE-O-2 317 135, pages 6 et 7 (exemple 2) et un mélange similaire, mais modifié suivant le principe de l'invention.

| | EXEMPLES | |
|---|---|---|
| | 15 | 16 |
| | art antérieur | invention |
| % chlorure de méthylène .... | 65 | 57 |
| % méthyl-propyl-cétone ... | 19 | 19 |
| % propanol ............... | 12 | 12 |
| % sel de $NH_4$ de l'ester sulfurique de lauryl-alcool (tensioactif) ..... | 4 | 12 |
| Rapports : tensioactif/cétone | 0,21 | 0,63 |
| " tensioactif/propanol | 0,33 | 1,00 |
| pH de la phase aqueuse ...... | 1,6 | 10,1 |
| | n'accepte pas l'eau | miscible à l'eau en toutes proportions. |

Le mélange de solvants d'exemple 15, selon la technique connue, forme deux couches dès qu'on lui ajoute de l'eau. Celui de l'invention, exemple 16, donne avec l'eau une micro-émulsion qui permet d'effectuer le nettoyage de surfaces grasses.

Revendications

1. Composition aqueuse pour la dispersion de substances hydrophobes, miscible à l'eau en toutes proportions, sans séparation de phases, constituée par une microémulsion d'un ou de plusieurs hydrocarbures, cétones et alcools et/ou éthers ou esters de glycol en présence d'un composé tensio actif, dans l'eau, le rapport molaire des groupes carbonyle (-CO-) présents, à l'hydrocarbure, étant de 0,2 à 1, caractérisée en ce que l'eau présente un pH de 8 à 14 et que le rapport pondéral du composé tensioactif à l'alcool ou/et à l'éther ou ester de glycol est de 0,5 à 2,6 et de préférence 0,8 à 2,2.

2. Composition suivant la revendication 1, dans laquelle la ou les cétones sont en $C_3$ à $C_{12}$, pouvant porter d'autres groupes fonctionnels, notamment ester, halogène ou second carbonyle, caractérisée en ce que le pH de l'eau est de 10 à 13,5, le rapport molaire des groupes carbonyle à l'hydrocarbure étant de 0,3 à 0,9.

3. Composition suivant la revendication 1 ou 2, dans laquelle l'alcool est en $C_1$ à $C_8$, caractérisée en ce que le rapport molaire alcool/hydrocarbure est compris entre 0,3 et 2,5.

4. Composition suivant la revendication 3, dans laquelle l'alcool est en $C_1$ à $C_4$, caractérisée en ce que le rapport molaire alcool/hydrocarbure est de 0,9 à 2.

5. Composition suivant la revendication 1 ou 2, dans laquelle les éthers ou esters de glycol sont en $C_4$ à $C_6$, carac-térisée en ce que le rapport molaire éther ou esters de gly-col/hydrocarbure est compris entre 0,45 et 2,5.

2

6. Composition suivant une des revendications 1 à 4, caractérisée en ce que l'hydrocarbure est un mono-, di- ou trichloro-alcane ou alcène.

7. Composition suivant une des revendications précédentes, dont l'agent tensio-actif est un alkyl-aryl-sulfonate ou/et un alkyl-sulfate de métal alcalin ou/et un alkyl phénol éthoxylé, caractérisée en ce que ces tensio-actifs sont présents à raison de 0,1 à 0,6 mole par mole de cétone.

8. Composition suivant une des revendications précédentes, caractérisée en ce qu'elle renferme en poids 15 à 30% d'hydrocarbure chloré en $C_1$ à $C_4$, 4 à 15% de cétone, 6 à 15% d'alcool et 6 à 16% de tensio-actif.

9. Composition suivant une des revendications précédentes, caractérisée en ce qu'elle renferme, en poids, 17 à 25% d'hydrocarbure chloré en $C_1$ à $C_4$, 6 à 12,5% de cétone, 7 à 15% d'alcool ou de glycol et dérivés et 8 à 20% d'agent tensio-actif.

10. Application de la composition, suivant une des revendications 1 à 9, au nettoyage d'objets souillés avec une substance goudronneuse, une résine, une matière grasse, un vernis ou une peinture, caractérisée en ce que le nettoyage est terminé par un lavage à l'eau.

11. Application suivant la revendication 10, caractérisée en ce que l'objet est un pinceau ou brosse ayant servi à la peinture, le traitement avec la composition étant suivi par un lavage à l'eau.

8518-

**0139560**
Numéro de la demande

## Office européen
### des brevets

# RAPPORT DE RECHERCHE EUROPEENNE

EP  84 40 1791

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 317 135  (R. GEISS)<br>* En entier * | 1 | C 11 D   3/44<br>C 09 D   9/04<br>C 23 G   5/06 |
| Y | FR-A-2 486 535  (M. GOTTSCHALK)<br>* En entier * | 1 | |
| Y | DE-A-2 927 968  (TEGEE-CHEMIE)<br>* En entier * | 1 | |
| Y | FR-A-  861 366  (SOLVAY)<br>* En entier * | 1 | |
| D,A | US-A-3 737 386  (R. GEISS)<br>* Revendications * | 1 | |

DOMAINES TECHNIQUES RECHERCHES (Int. Cl.4)

C 11 D
C 09 D
C 23 G

Le présent rapport de recherche a été établi pour toutes les revendications

| Lieu de la recherche | Date d'achèvement de la recherche | Examinateur |
|---|---|---|
| LA HAYE | 12-11-1984 | GOLLER P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82